# EUROPEAN PATENT APPLICATION

(11) **EP 4 823 061 A1**
(43) Date of publication of application: **14.10.2026**
(21) Application number: 25382360.3
(22) Date of filing: 08.04.2025
(51) Int. Cl.: H04L 47/80

(54) **COMMUNICATION SYSTEM AND METHOD**

(71) Applicant: Vodafone Group Services Limited, Newbury RG14 2FN (GB)
(72) Inventor: RAMAZANIREND, Elmira, London W2 6 (GB)
(74) Representative: Boult Wade Tennant LLP

(57) **Abstract**

Communication system and method comprising receiving a call at a first user equipment, UE, wherein the call originates at a second UE. Receiving at the first UE a selection of an avatar. The first UE sending an avatar identifier of the selected avatar to a data channel (DC) application server. The DC application server sending the avatar identifier as part of a request for avatar definition data to an avatar storage location. The avatar storage location retrieving the avatar definition data based on the avatar identifier. The avatar storage location sending the avatar definition data to the DC application server. The DC application server sending the avatar definition data to a media function (MF). The MF generating avatar streaming data based on the avatar definition data. The MF sending the avatar streaming data to the second UE.

## Description

### Field of the Invention

The present invention relates to a system and method for generating, registering and using user proxies or avatars, especially for use in calls within a mobile network.

### Background of the Invention

In the world of digital communication and virtual environments, avatars are steadily gaining greater relevance as indispensable tools for personal representation and interaction. Avatars can act as proxies for users when they are unavailable or to enhance privacy. For example, avatars can be used in multi-user online games.

In general use, avatars are defined to look and sound according to the preferences of the user. It can be difficult or impossible to identify a user from the avatar they are using, as the appearance of the avatar may not match closely or be completely different to the person they are representing. When avatars communicate with other users, for example, in a computer game or virtual world, this can pose a security or safeguarding risk, especially for vulnerable users. This can also be important in avoiding fraud or misrepresentation.

Therefore, there is required a method and system that improves security, control and the management of avatars, their creation and use.

### Summary of the Invention

It is useful for calls and other external interactions on a mobile device to be conducted by a proxy for the user when the user is busy or unable to take a call. Such proxies can take the form of an avatar, which can be a visual representation of the user or a digital personification of a person. However, avatars can take any form. Data or metadata can be used to generate the avatar, and different users can have different avatars. A single user can have a plurality of avatars for different occasions or contexts. For example, a user may have an avatar for professional or work interactions and a different avatar for social interactions. Users can have different avatars to select for other purposes or simply for variety.

The user can generate data to define each avatar so that they can have different characteristics. The user can use a mobile application to generate the avatar definition data.

Different avatars have different avatar identifiers (preferably unique identifiers). This enables different avatars to be instantiated when required. Users operating a mobile device or any user equipment (UE) also have their own subscriber identifier, which is used to access a mobile network. To use an avatar on a mobile network (e.g., within a call), the avatar definition data and avatar identifiers need to be generated and registered securely to avoid impersonation and to limit avatar use to that allowed by the mobile network for that particular user. It may be that some users do not have permission to generate and use avatars (for example children), or avatars are only available for limited use or for limited time. The present method and system allow such security and control.

The user uses the mobile device or UE to send a request to register a (new) avatar. The request includes the user's subscriber information, such as their subscription permanent identifier (SUPI), a generic public subscription identifier (GPSI) or other subscription or equipment identifier (e.g., international mobile subscriber identity - IMSI, international equipment identifier - IMEI, or permanent equipment identifier - PEI). This may be sent by a mobile application on the UE or as part of another action or component, such as a native application used to make and receive calls, for example. An application server (e.g., within the mobile network) receives and validates the request. For example, the application server can determine if the user has permission to register avatars or if they have reached a limit on a number of avatars that they can generate and register.

The application server validates the request by sending the request to a data channel signalling function (DCSF). The DCSF needs to obtain subscriber information based on the subscription identifier contained in the request (e.g. SUIP/GPSI). The DCSF does this by querying a component of the user's home network, such as a home subscriber system (HSS), unified data management, (UDM), and/or a unified data repository (UDR). The component of the home network provides the subscriber information based on the supplied subscriber identifier. The subscriber information may include access information, UE registration details and/or communication session information e.g., Access and Mobility Management Function (AMF), Session Management Function (SMF), and/or Authentication Server Function (AUSF) for the subscriber of the UE, for example. This enables the UE to be validated and authenticated for the avatar services. The subscriber information may also include a list of previously registered avatars for a particular subscriber.

The DCSF sends the subscriber information (retrieved from the home network of the UE) to a storage facility or data store used to store avatar data. This may be called a base avatar repository (BAR), for example. The BAR generates a new avatar identifier (ID) and stores the avatar ID together with the subscriber identifier. The BAR also sends the avatar ID back to the DCSF, which sends the newly generated avatar ID to the component of the home network and to the application server.

The application server sends the avatar ID to the UE and to another application server (e.g., a data channel application server). The data channel application provides avatar and other extended reality (XR) or virtual reality (VR) services. In the meantime (before or after to the other steps), the UE generates definition data or meta data for defining the features of the avatar. This can include the appearance, sound and other characteristics of the avatar, for example. The UE sends the avatar definition data to the BAR, which stores the avatar definition data together with the avatar ID so that the avatar definition data can be retrieved if and when the avatar ID is provided (e.g., as part of a separate process).

Once the avatar has been registered, it may be used for various applications. One such application is to provide a proxy for a user of the UE during calls. For example, the user can receive a call at their (first) UE from a second UE or mobile device. The call ringing screen may indicate an incoming call and an option for the avatar to answer the call. There may be several available and registered avatars, and the user can select one of the avatars. For example, one avatar may be more suitable for work or formal calls and another avatar may be more suitable for social or family calls. Optionally, the avatar generation and registration process may take place (e.g., if the user does not have any current, active or available avatars).

After the avatar is selected, the UE sends or transmits the corresponding avatar identifier (e.g., registered during the above-described method) to the DC application server. This forms a request for the corresponding avatar definition data. The DC application server sends the avatar identifier to the avatar storage location or BAR, which retrieves the avatar definition data based on the avatar identifier provided in the request.

The avatar storage location sends the avatar definition data to the DC application server, which sends the data to a media function (MF) or media execution server. The MF generates avatar streaming data using the avatar definition data (e.g., by executing software code using the avatar definition data). The avatar streaming data is transmitted directly to the second UE (e.g., over a mobile network) so that the second UE views the avatar within the call with the first UE. This simplifies the process and reduces network traffic.
Data can be sent to and from the second UE and the MF so that responses, voice, video (if this is a video call) and other components of the call can be used to create responses by the avatar. For example, the avatar streaming data may generate video and the voice of an avatar, which may ask a question. The response to that question (e.g., the voice or text commands of a user of the second UE) may also be sent to the MF from the second UE and interpreted (e.g., using a voice to text translator). The MF may process these data in real-time to provide real-time responses in the form of a conversation without human intervention.

The user of the first UE may be kept informed of the progress or content of the avatar call. This may take the form of speech to text converter providing a real-time written transcript, for example. Alternatively or additionally, a text transcript or summary may be provided at the end of the call. At any time, the user of the first UE can intervene in the call and suspend the avatar, for example.

In accordance with a first aspect, there is provided a communication method comprising:
receiving a call at a first user equipment, UE, wherein the call originates at a second UE;
receiving at the first UE a selection of an avatar;
the first UE sending an avatar identifier of the selected avatar to a data channel, DC, application server;
the DC application server sending the avatar identifier as part of a request for avatar definition data to an avatar storage location;
the avatar storage location retrieving the avatar definition data based on the avatar identifier;
the avatar storage location sending the avatar definition data to the DC application server;
the DC application server sending the avatar definition data to a media function, MF;
the MF generating avatar streaming data based on the avatar definition data; and
the MF sending the avatar streaming data to the first UE;. Therefore, a proxy or avatar can take a call more conveniently and securely. The call may be a video call using a mobile network, for example.

Optionally, the method may further comprise registering the avatar before receiving the call. Registration may be made by any suitable method but preferably according to the registration process described in detail in this description.

Optionally, during the call with the second UE, the avatar streaming data may be rendered to generate an interaction of an avatar with the second UE. The rendering may take place on the UE or at another location (e.g., within a part or component of a mobile network).

Optionally, the interaction may comprise a response to a query within the call of the second UE. The query may arise at the avatar (e.g., "who is calling?", "what is the subject of the call?", etc.) or from the caller (e.g., "when is the first user available to speak?").

Optionally, the interaction may comprise a request to obtain a reason for the call.

Optionally, interaction may comprise an offer for a call-back to the second UE. This offer or enquiry may originate at the avatar (e.g., "the person you are calling is not currently available. Would you like them to call you back?").

Optionally, the method may further comprise consulting a calendar of a user of the first UE to determine an available time and date for the call-back. The calendar may be an application on the first UE or may be data stored elsewhere (e.g., on a separate server or at a virtual server or service). The calendar may be accessed through an application programming interface (API), for example.

Optionally, the rendered avatar may present to a user of the second UE during the call an offer of the determined available time and date for the call-back. One or more alternative call-back times and dates may be provided, for example.

Optionally, when the rendered avatar receives from the user of the second UE during the call an indication of a rejection of the offered time and date for the call-back the the rendering of the avatar offers an alternative time and date to the user of the second UE during the call. This process or series of interactions may repeat until a suitable (approved date and time) is presented and accepted.

Optionally, the method may further comprise the rendered avatar receiving from the user of the second UE during the call an indication of an acceptance of the offered time and date for the call-back and in response saving an appointment for the call-back at the accepted time and date in the calendar of the user of the first UE. The appointment or reminder may have an advance reminder time (e.g., sending a notification or reminder in advance of the appointment), for example.

Optionally, the method may further comprise providing a written description of the interaction and/or a summary of an outcome of the call. This can be text shown on a display of the first UE, stored in memory of the UE, sent (e.g., by email) to the user of the first UE, or otherwise provided. The text may be generated at a media function (MF) and transmitted over the network, for example.

Optionally, the written description may be provided in real-time during the interaction and/or provided at a conclusion of the call. A real-time display may show a scrolling or continuous stream of text on the display as the call progresses, for example.

Optionally, the method may further comprise receiving a request from a user of the first UE to intervene with the call and in response to the request pausing or stopping the incorporating of the avatar streaming data in the call. For example, a button or selectable icon on the display of the first UE can be pressed by the user. This will pause or stop the rendering of the avatar (and streaming of the avatar streaming data from the MF) and provide the user with an interface to continue with the call (e.g., activate the microphone, camera, show the second user on the screen, etc.).

In accordance with a second aspect, there is provided user equipment (UE) comprising:
one or more processors; and
one or more memory storing computer-executable instructions that, when executed by the processor, cause the UE to:
   receive a call at the UE, the UE being a first UE, wherein the call originates at a second UE;
   receive a selection of an avatar; and
   send an avatar identifier of the selected avatar to a data channel, DC, application server. A plurality of UEs may be present in a mobile network. Each UE can act as a first UE (receiving calls) or a second UE (initiating and making calls).

In accordance with a third aspect, there is provided a system comprising:
one or more UE, as described above;
a data channel, DC, application server;
an avatar storage location; and
a media function, MF,
wherein the DC application server is configured to send the avatar identifier as part of a request for avatar definition data to the avatar storage location,
wherein the avatar storage location is configured to:
   retrieve the avatar definition data based on the avatar identifier, and
   send the avatar definition data to the DC application server,
wherein the DC application server is further configured to send the avatar definition data to the MF, and
wherein the MF is configured to:
   generate avatar streaming data based on the avatar definition data, and
   send the avatar streaming data to a second UE. There may be a plurality of each entity or device operating in a communications network, for example. The second UE (caller) is a UE that initiates a call to a first UE (call recipient).

In accordance with a further aspect there is provided a method for registering an avatar, the method comprising:
a user equipment, UE, sending a request to register an avatar, wherein the request comprises an identifier of a subscriber of the UE;
an application server receiving the request from the UE;
the application server sending the request to a data channel signalling function, DCSF, and in response the DCSF requesting subscriber information from a component of a home network of the UE subscriber based on the subscriber identifier;
the component of the home network providing the subscriber information to the DCSF;
the DCSF sending the subscriber information to an avatar storage location;
the avatar storage location generating an avatar identifier;
the avatar storage location storing the avatar identifier with the subscriber identifier;
the avatar storage location sending the avatar identifier to the DCSF;
the DCSF sending the avatar identifier to the component of the home network and to the application server;
the application server sending the avatar identifier to the UE and to a data channel application server;
the UE generating avatar definition data;
the UE sending the avatar definition data to the avatar storage location; and
the avatar storage location storing the avatar definition data together with the avatar identifier. Therefore, avatars can be registered reliably and securely.

Preferably, the application server may be an IP multimedia subsystem (IMS) application server. Other application servers can be used but an IMS application server is particularly suitable for avatar use.

Optionally, the subscriber identifier may comprise a subscription permanent identifier (SUPI) and/or a generic public subscription identifier (GPSI) of the UE subscriber. Other subscription or equipment identifiers may be used, such as international mobile subscriber identity (IMSI), permanent equipment identifier (PEI) or international mobile equipment identifier (IMEI), for example.

Optionally, the method may further comprise the component of the home network storing the avatar identifier associated with the subscriber information. Therefore, the home network can be aware of the avatars being generated by a particular subscriber.

Optionally, the home network may store the avatar identifier together with previously generated avatar identifiers of the subscriber of the UE. Therefore, the home network can maintain a list of avatars for a particular subscriber.

Optionally, the component of the home network may be a unified data management (UDM) and/or a unified data repository (UDR). Other components of the home network may be used, such as an HSS or HLR, for example.

Preferably, the avatar definition data may comprise any one or more data of: voice, image, and video. Other descriptive data may be included, such as colour, shape, etc.

Optionally, the method may further comprise the application server validating the request by determining that the subscriber of the UE has permission to generate avatars by receiving the avatar identifier from the DCSF. Security, validation and authentication may also be carried out. Therefore, by receiving the avatar identifier (following the success or earlier steps), the application server can be sure that the subscriber has permission to generate, register and use avatars (e.g., within calls).

Optionally, the method may further comprise:
receiving a call at the UE, wherein the UE is a first UE and the call originates at a second UE;
receiving at the first UE a selection of an avatar corresponding to the avatar identifier;
the first UE sending the avatar identifier the DC application server;
the DC application server sending the avatar identifier as part of a request for avatar definition data to the avatar storage location;
the avatar storage location retrieving the avatar definition data based on the avatar identifier;
the avatar storage location sending the avatar definition data to the DC application server;
the DC application server sending the avatar definition data to a media function (MF) or a media execution server;
the MF generating avatar streaming data based on the avatar definition data; and
the MF sending the avatar streaming data to the first UE. The avatar may be used for purposes other than calls, such as within games or social media applications, for example. The MF sends the avatar streaming data directly to the second (calling) UE.

Optionally, communications between the data channel application server and the avatar storage location are over a dedicated interface. This may be a separate interface to those used in other signalling and messaging within the method and system.

According to a further aspect, there is provided user equipment (UE) comprising:
one or more processors; and
one or more memory storing computer-executable instructions that, when executed by the processor, cause the UE to:
   send a request to register an avatar, wherein the request comprises an identifier of a subscriber of the UE;
   receive from an application server an avatar identifier;
   generate avatar definition data; and
   send the avatar definition data to an avatar storage location.

Preferably, the avatar definition data may be generated by a mobile application. The avatar definition data may also be generated external to the UE (e.g., downloaded from external sources), for example.

Optionally, the application may be downloaded from a data channel application repository located within a core network. Other application stores may be used to supply the application.

According to a further aspect, there is provided system comprising:
one or more UE as described previously;
an application server;
a data channel signalling function, DCSF;
a component of a home network;
an avatar storage location; and
a data channel application server, wherein
the application server is configured to:
   receive the request from the UE, and
   send the request to the DCSF; and wherein
   the DCSF is configured to:
      in response to the request from the application server request subscriber information from the component of the home network based on the subscriber identifier; and wherein
      the component of the home network provides the subscriber information to the DCSF; and wherein
      the avatar storage location is configured to:
         generate an avatar identifier,
         store the avatar identifier with the subscriber identifier, and
         send the avatar identifier to the component of the home network and to the application server; and wherein
      the application server is further configured to:
         send the avatar identifier to the UE and to a data channel application server; and wherein
      the avatar storage location is further configured to:
         store the avatar definition data together with the avatar identifier.

Preferably, the avatar storage location may be located with a core network (of a mobile operator).

It should be noted that the separate methods may be combined and used in any combination. For example, the method for registering the avatar may be combined and followed with the communication method. However, the methods may be implemented separately. Furthermore, the UE and systems may each contain all of the functionality and components for registering the avatar and using the avatar (e.g., by implementing the communication method).

The methods described above may be implemented as a computer program comprising program instructions to operate a computer. The computer program may be stored on a computer-readable medium, including a non-transitory computer-readable medium.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magneto-optic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX (RTM), Windows (RTM) or Linux (RTM), for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a flowchart of a method for registering an avatar;
FIG. 2 shows a flowchart of a communication method using the avatar of Figure 1;
FIG. 3 shows a schematic diagram of a computer system used to implement the methods of Figures 1 and 2;
FIG. 4 shows a schematic diagram of a communications system used to implement the methods of Figures 1 and 2;
FIG. 5 shows a further schematic diagram of the communications system used to implement the methods of Figures 1 and 2;
FIG. 6 shows a schematic diagram of a portion of a communications system used to implement the methods of Figures 1 and 2;
FIG. 7 shows a sequence diagram illustrating further aspects of the method for registering an avatar of Figure 1;
FIG. 8 shows a sequence diagram illustrating further aspects of the communication method of Figure 2; and
FIG. 9 shows a schematic diagram of a process for interpreting speech during a call including an avatar.

It should be noted that the figures are illustrated for simplicity and are not necessarily drawn to scale. Like features are provided with the same reference numerals.

### Detailed description of the preferred embodiments

An avatar refers to a digital representation, proxy, or character that represents a user in virtual environments such as Virtual Reality (VR), Augmented Reality (AR), or Extended Reality (XR). These avatars can range from 2D representations, to highly detailed 3D, lifelike models that mimic the user's appearance or behaviour in real time.

For some time now, 3GPP has been standardizing concepts related to XR. The role of avatars is presented in this disclosure, including their integration into existing communication services and the support of technologies for immersive virtual environments, thereby enhancing the user experience.

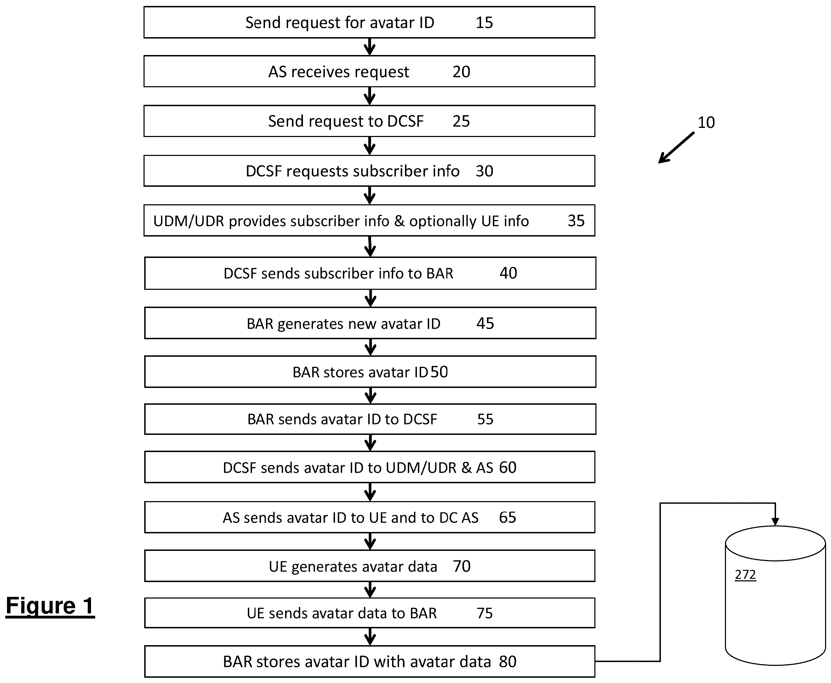

Figure 1 shows a flowchart of a method 10 for registering an avatar or proxy of a user. A mobile device or user equipment (UE) initiates the method 10 by requesting the registration or a new avatar identifier at step 15. The request can be initiated at any time, including but not limited to when a user receives a call. This request includes an identifier of the UE. The identifier of the UE may be a subscription permanent identifier (SUPI), a generic public subscription identifier (GPSI) or other identifier (e.g., international mobile subscriber identity - IMSI, international equipment identifier - IMEI, or permanent equipment identifier - PEI). An application server, such as an IP multimedia subsystem (IMS) receives the request from the UE at step 20.

The application server validates the request by confirming that the requesting UE has permissions to create an avatar. The application server does this by sending the request to a data channel signalling function (DCSF) at step 25. In response, the DCSF requests subscriber information by sending the UE identifier included in the request to a component of the UE subscriber's home network (step 30). This component may be a home location register (HLR), home subscriber server (HSS), unified data management (UDM), and/or a unified data repository, UDR, for example.

The component of the home network provides subscriber information to the DCSF at step 35 and the DCSF sends the subscriber information to an avatar storage location (e.g., a base avatar repositor - BAR) at step 40. Optionally, one or more identifiers of the UE may also be sent with the subscriber information. This triggers the BAR to generate a new avatar or proxy identifier (step 45) and to store the avatar identifier with the subscriber identifier so that the avatar identifier can be retrieved when the subscriber identifier is provided (step 50). The BAR sends the generated avatar identifier to the DCSF (in response to the DCSF sending the BAR the UE subscriber information) at step 55.

The DCSF now sends the avatar identifier the component of the home network (UDM/UDR) and to the application server at step 60. The application server sends the avatar identifier to the UE and to a data channel (DC) application server (e.g., an extended reality (XR) or virtual reality (VR) application server) at step 65. The UE may now generate (or has already generated) data defining the avatar (step 70). These data may include meta data and any other information necessary to render the avatar. These data definition data are sent to the BAR at step 75 and the BAR stores the avatar definition data with the avatar identifier at step 80. The BAR may have a database 272 for storing these data.

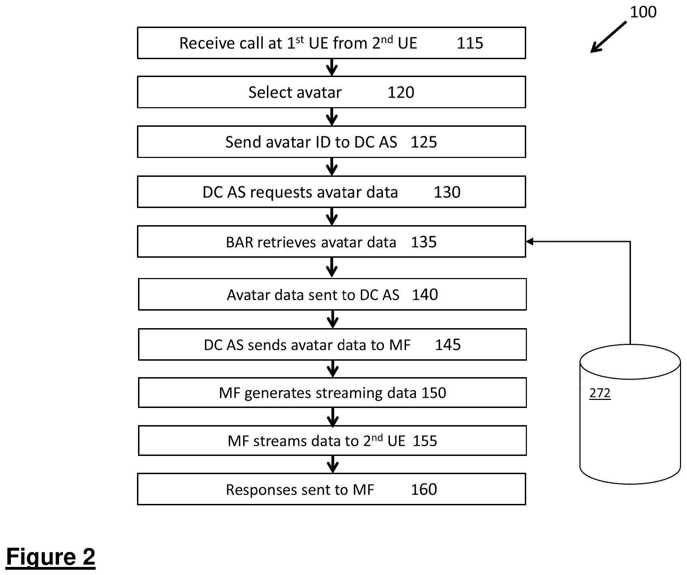

Once at least one avatar has been created and registered for a user of a UE, it may be used. Figure 2 shows a flowchart of a method 100 for incorporating an avatar into a call made by a second UE or mobile device to a first UE.

At step 115, the first UE receives the call. A user of the first UE decides not to take the call but instead selects an avatar (if they have more than one to choose from) to take the call on their behalf (step 120). The first user sends the avatar identifier of the selected avatar to the DC application server at step 125. The DC application server may validate the request to determine if the avatar identifier is valid (it may optionally expire after a period, for example). At step 130 (e.g., following successful validation), the DC application server creates a request, including the avatar identifier, for the avatar definition data and sends this request to the avatar storage location or BAR.

The BAR retrieves the avatar definition data using the avatar identifier as a reference, from a database or data store at step 135. The avatar definition data may have been created on the first UE or elsewhere. If there is no saved avatar definition data for the particular requested avatar identifier, the BAR may return an error or simply fail to respond. When the saved avatar definition data is available and can be retrieved, these data are sent by the BAR to the DC application server at step 140.

The avatar definition data is data or meta data that is processed by a suitable executable or function to generate visual, video, and/or audio data representing the avatar. This processing is carried out by a media function (MF) or media generation server. At step 145, the DC application server sends the avatar definition data to the **MF,** which generates avatar streaming data from the avatar definition data at step 150. The MF streams the data to the second UE at step 155 (e.g., video and audio of the avatar). This may take the form of the first UE accepting the call but instead of the microphone (and camera) of the first UE being used to capture the voice (and image) of the first user, the avatar representation is incorporated into the call stream, which is sent directly to the second UE. At step 160, responses from the user of the second UE are obtained and sent to the MF. This processing may include natural language processing and artificial intelligence (AI) and machine learning (ML) techniques. This processing may include: Al-ML based Speech Recognition, Intent Recognition, Entity Recognition, Data Access, Natural Language Generation, and Follow-up Handling, for example.

Once the avatar call has been initiated, it may continue without user input. However, the user may be updated with the progress of the call either in real-time or after completion of the call. For example, an ongoing transcript of the call (both text of the voice of the avatar and text of the voice of the caller) may be captured and presented to the user of the first UE. This text may be displayed on the screen, or sent or stored as a file after the call completes. In some example implementations, the user of the first UE (receiving the call and initiating the avatar) may intervene in the call and suspend or stop the avatar from taking part in the call. There may be some handover actions, such as the avatar announcing the user will shortly enter the call, for example.

The avatar may interact with the call in different ways. For example, the avatar may ask the caller to describe the purpose of the call and this may be communicated to the call recipient (the user of the first UE). The avatar may additionally or alternatively provide the caller with the option of the call recipient to call back the caller. If such an option is accepted by the caller, the system and method operating on the first UE may query or consult a calendar of the call recipient (either within the UE or by accessing a remote calendar). The purpose of this calendar consultation is to find a suitable and free time for the call recipient to call-back the caller. For example, this may be indicated in the calendar as part of the usual working day (if a formal or work avatar was selected) or an evening or weekend free slot if the social of family avatar was selected. There may be advance rules set up by the call recipient determining if, how, and when call-backs can be scheduled.

Once a suitable call-back time and date has been determined, this information may be presented to the caller by the avatar during the call. If the caller accepts the call-back time and date (e.g., by saying "yes", or nodding in a video call), the system and method may add a calendar entry (with or without reminder) at that time. If the caller indicated that they could not accept that time and date (e.g., by saying "no", or shaking their head in a video call) the calendar may be re-consulted to find an alternative free time and date that also meets the call recipient's criteria. The process may be loop or continue until an acceptable time and date for the call-back has been provided and approved by the caller. Interactions with the calendar may be over application programming interface (API), for example.

Both methods 10 and 100 described with reference to Figures 1 and 2, respectively, may be carried out by a computer system 200. The computer system 200 may comprise one or more separate machines or nodes, for example.

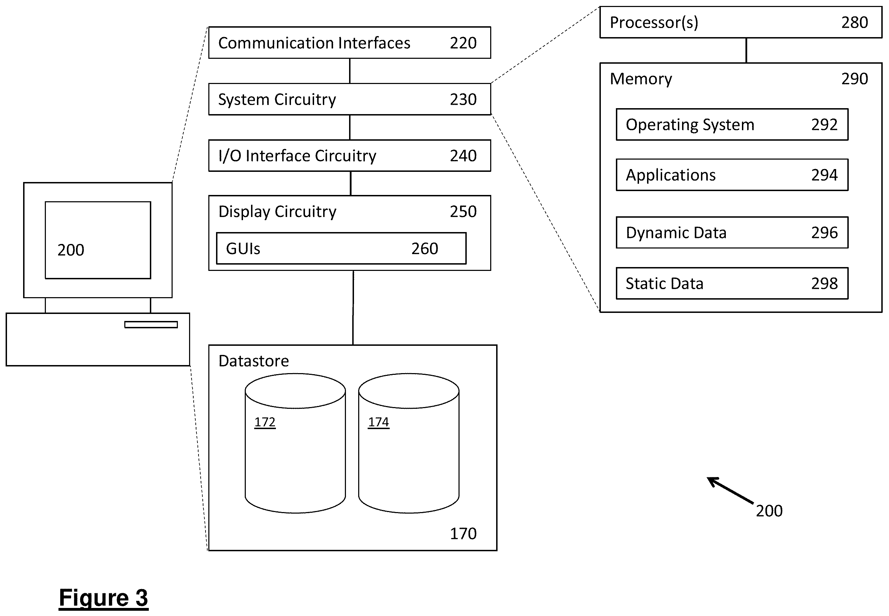

As shown in Figure 3, the computer system 200 includes a number of components including communication interfaces 220, system circuitry 230, input/output (I/O) circuitry 240, display circuitry and interfaces 250, and a datastore 270. The system circuitry 220 can include one or more processors or CPUs 280 and memory 290. The system circuitry 230 may include any combination of hardware, software, firmware, and/or other circuitry. The system circuitry 230 may be implemented, with one or more systems on a chip (SoC), application specific integrated circuits (ASIC), microprocessors, and/or analogue and digital circuits.

The display circuitry may provide one or more graphical user interfaces (GUIs) 260 and the I/O interface circuitry 240 may include touch sensitive or non-touch displays, sound, voice or other recognition inputs, buttons, switches, speakers, sounders, and other user interface elements. The I/O interface circuitry 240 may include microphones, cameras, headset and microphone input /output connectors, Universal Serial Bus (USB) connectors, and SD or other memory card sockets. The I/O interface circuitry 240 may further include data media interfaces (e.g., a CD-ROM or DVD drive) and other bus and display interfaces.

The memory 290 may include volatile (RAM) or non-volatile memory (e.g., ROM or Flash memory). The memory may store the operating system 292 of the computer system 200, applications or software 294, dynamic data 296, and/or static data 298. The datastore or data source 270 may include one or more databases 272, 274 and/or a file store or file system, for example. Database 272 may form part of the BAR.

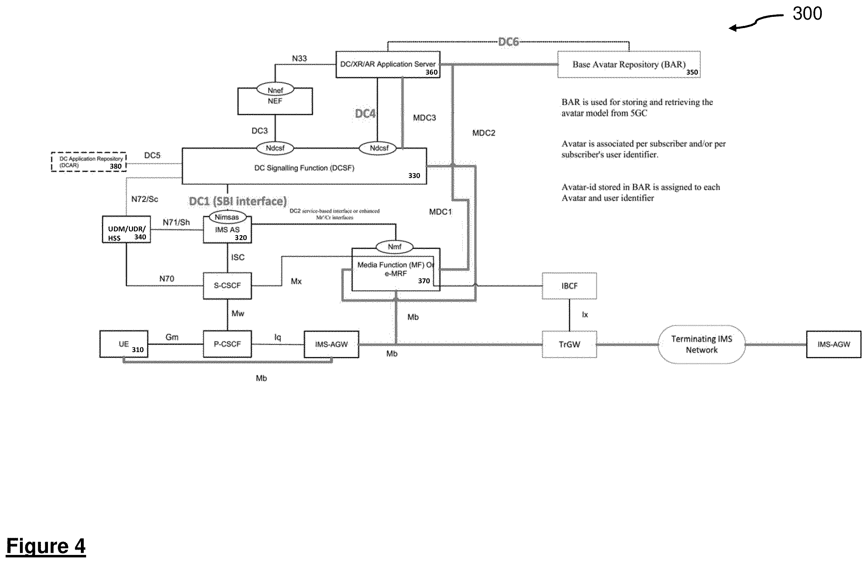

Figure 4 shows a schematic diagram of a system 300 used to implement the methods 10 and 100. The system 300 includes different components of a communications network and a plurality of interfaces used to pass the data and signalling between these components. Figure 4 illustrates the use of IP multimedia subsystem (IMS) architecture in the system 300. This architecture is integrated with other functionalities and empowered by the data channel (DC). The nodes and network functions are connected, the corresponding interfaces (DC1, DC2, DC3, DC4, DC5 and DC6) are referenced, and the key connections for this example implementation are highlighted in this figure. The system 300 is based around 5GC architecture in this example.

In Figure 4 a single UE 310 is illustrated. However, more than one UE 310 may be in operation in an implemented system. The UE 310 sends its request to register the avatar over the IMS proxy and serving call session control functions, which handle usual IMS registrations. The application server in this example implementation is an IMS application server (IMS AS) 320. The interface between the IMS AS 320 and the DCSF 330 is illustrated in this figure. The component of the home network is a UDM/UDR 340. The interface (DC1) between the IMS AS 320 and the DCSF 330 is also shown.

The avatar storage location or repository is shown as a base avatar repository BAR 350 in Figure 4. The BAR 350 communicates with the DC application server 360 using interface DC6. The DC application server includes functionality to provide extended reality (XR) and augmented reality (AR) services. The DC application server communicates with the DCSF 330 using interface DC4. A mobile application is used on the UE 310 to generate the avatar definition data. The mobile application is provided by a DC application repository 380.

As described previously, once the avatar is registered, the MF 370 receives avatar definition data from the DC application server 360 and streams data to the UE 310 through various components of the system 300.

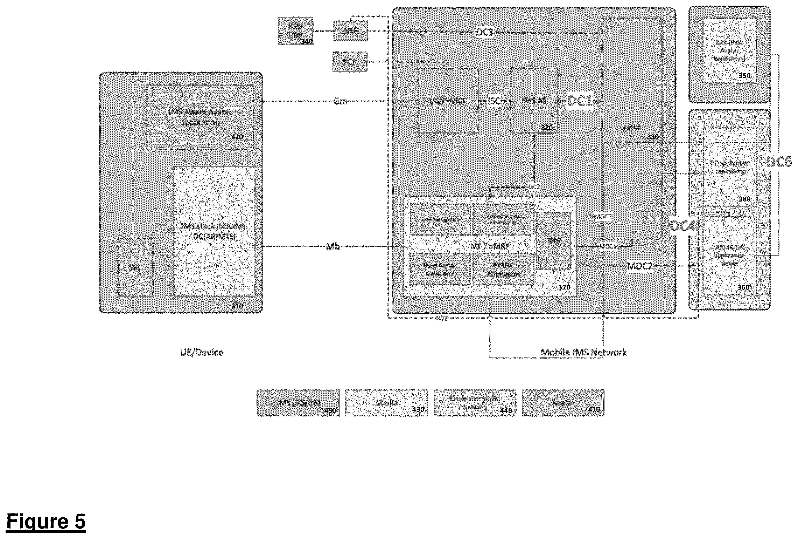

Figure 5 shows a further schematic diagram of the system 300 illustrating the components shown in Figure 4 but illustrating the different communications planes for the various interfaces and data. This figure illustrates where the avatar data 410 is defined (within the application 420 of the UE 310) and generated (within the MF 370). The media plane 430 provides streaming services for these data. Mobile network communications 440 are illustrated to show cellular messaging. IMS services 450 are illustrated within the mobile network.

In the context of avatar communication and avatar calls, it is important to identify, authenticate, and authorise avatars within the communications network and map them to registered or subscribing UEs. The mobile application used to generate the avatar definition data is the Avatar Creation application. The Avatar Creation application may belong to an MNO network, a third party, or an AR/XR-supporting device application, which supports authentication and registration with the BAR (Base Avatar Storage)/UDM (Unified Data Management)/UDR (Unified Data Repository) repository in accordance with the described method and system. The Avatar Creation application may communicate with the core network to store avatars in the BAR (Base Avatar repository) within the operator network.

The creation and storage of an avatar requires the identification and authentication of the avatar. This in turn requires the secure assignment of an avatar identifier to the avatar, which is mapped to a subscribing user within the network. Mapping the avatar identifier to the specific user and optionally also to the user equipment, which has a user and (optionally) an equipment identifier known to the network operator (e.g., a subscription permanent identifier (SUPI), a generic public subscription identifier (GPSI) an international mobile subscriber identity (IMSI) , a permanent equipment identifier (PEI) and/or an international mobile equipment identifier (IMEI)) is an important step in the process, as this ensures that the entity (avatar) can be trusted by other users, being properly authenticated, authorized, and securely stored.

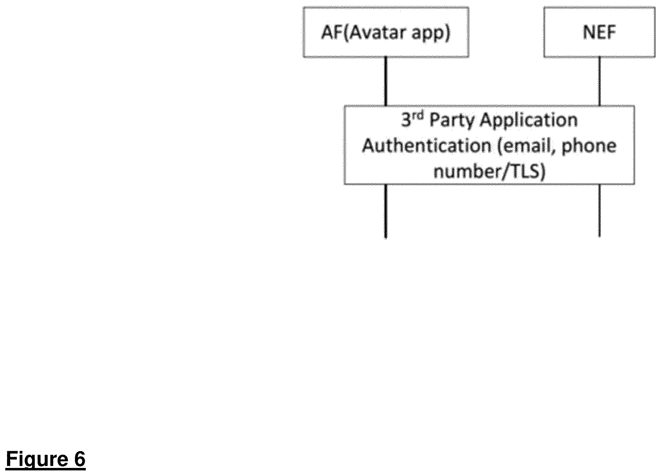

Before the Avatar Creation application can be used on a UE 310 to create an avatar, the application must be downloaded and installed following authentication of the subscriber user. However, the Avatar Creation application itself may be verified and authenticated to enhance security. Figure 6 illustrates schematically the relationship between the Avatar Creation application and a network exposure function (NEF), which carries out such verification and authentication. This prevents malicious applications being downloaded and installed. This process may be based on third party application authentication defined in 3GPP.

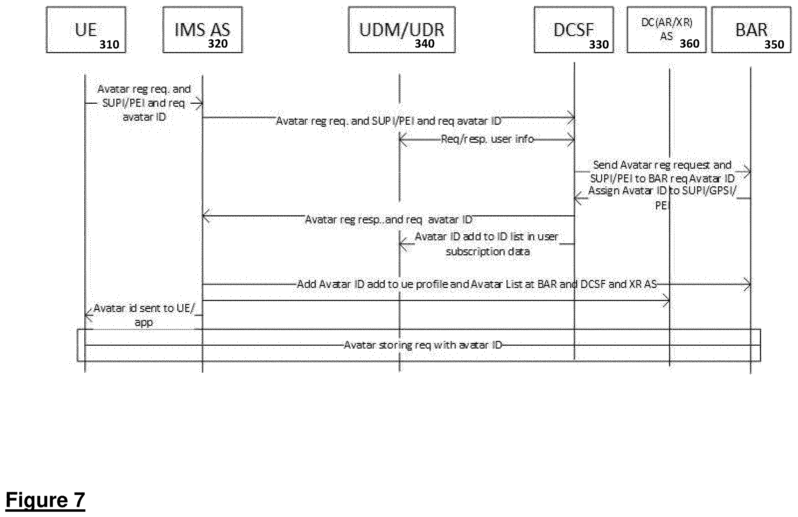

Once the validated Avatar Creation application has been installed on the UE 310, a first (and any further) avatar may be created and registered according to method 10. The sequence diagram shown in Figure 7 illustrates further aspects of this method 10. This results in the avatar being identified and mapped to a particular UE and/or subscriber.

When an avatar is generated in the Avatar Creation application it is submitted to the network to be saved in the BAR 350 (and assigned to the UE's profile).
1. The Avatar Registration request is sent from UE 310 and application repository (within the UE 310) to the IMS AS 320.
2. The IMS application server (AS) 320 sends the user information request to the DCSF 330. The DCSF 330 queries the subscription information from UDM/UDR 340. The response from the UDM/UDR 340 includes the UE's SUPI/GPSI, optionally IMEI/PEI, and an avatar identifier list (if previous avatars have been created and registered).
3. After receiving information from UDR/UDM 340, the DCSF 330 sends the Avatar Registration request to the BAR 350 through the XR AS 320. This request contains the UE subscription information and Avatar ID list. The request prompts the BAR 350 to send a new avatar identifier.

Note 1: A new interface for signaling (DC6) is used for the communication between the XR (DC/AR) AS 360 and BAR 350.
4. The BAR 350 checks the UE's profile and Avatar ID list and generates the new avatar identifier. The new avatar identifier is sent back to DCSF 330.
5. DCSF 330 provides the avatar identifier as a response to IMS AS 320 registration request.
6. The IMS AS 320 updates avatar identifier list in the UDR/UDM 340 and XR (DC/AR) AS 360. Communications towards XR (DC/AR) AS 360 is executed using the DC1 and DC4 interfaces. These interfaces are modified to update information about the avatar list of particular UEs 310. DC4 contains GPSI information to identify the UE 310.

Note 2: XR AS 320 includes the capabilities of data channel (DC) and/or AR AS and supports all next generation real time communications. DC AS 360 is currently supported for data channel-based IMS network tasks. The AR AS 320 currently supports IMS based AR communicational services.
7. IMS AS 320 confirms the avatar identifier with the BAR 350 and sends the new avatar identifier to the UE 310.
8. The UE 310 stores the new avatar in the BAR 350 with the corresponding avatar identifier.

Figure 7 shows a sequence diagram illustrating in more detail the method 100 for initiating an avatar call using an avatar generated and registered using method 10. When a user needs to use an avatar, the avatar identifier list is downloaded to the UE 310 using a bootstrap data channel via the DCSF 330. The DCSF 330 verifies whether UE 310 is allowed to use avatar representation.

Note 3: The UE 310 can have a default avatar and several options to select any other saved avatar from the avatar list on the UE screen. These alternative avatars may be specific to a situation or chosen based on current preference by the user.

This method can commence once the following required components have been installed or are available to the UE 310:
IMS Aware Avatar application: This application may be embedded in the UE 310, or it may be downloaded from the AR/XR/DC AS 360 or DC application repository 380, for example. The avatar application may be used to create the avatar.

The IMS stack includes DC(AR)MTSI: DC(AR)MTSI support is provided in the chipset, which has an IMS stack. This enables device communication with a data channel supported IMS network. The split rendering client (SRC) and split rendering server (SRS) are split rendering components on the client and device. These can be used solo or combined based on specific use and device capabilities.

The following components are available in the Mobile IMS Network:
- MF MRF (Media Function Media Repository Function): The MF 370 or enhanced an MRF contains additional media functions to support new services such as data channel, split rendering, avatar related media functions, and Al related media functions.
- BAR (Base Avatar Repository): The BAR 350 is used for storing and retrieving the avatar model from 5GC.

Note 4: The avatar identifier, stored in the BAR 350, is assigned to each avatar and user identifier.
- DC application repository: This is a storage system for holding applications, content, or services related to the data channel.
- AR/XR/DC AS 360: This manages and delivers immersive experiences by handling data communication, user sessions, and content delivery for AR/XR applications.

The following describes an example use of the avatar once registered:
UE 2 opens dialler and calls UE 1.
UE 1 receives call (ringing).
Ringing answer options are downloaded from the DC Application Server 360 (to UE 1)
UE 1 has saved two (but can be more) avatars in the BAR 350 within the network. These avatars (their identifiers) are mapped, identified and associated with their subscriber identifier (e.g., SUPI/GPSI) and optionally also with their equipment (IMEI/PEI).

UE 1 can create and save avatars to the network, either from a third-party provider or by using the avatar application on the device (part of the device or a downloaded application). In an alternative implementation, the IMS Data Channel on the dial screen may have an option of choosing creating or editing avatar on the screen (e.g., using java script) downloaded from DC(XR/AR) AS 360 through the DCSF 330 via the bootstrap data channel.

UE 1 saves the newly created avatar (in this example the user of UE 1 wants to use the avatar for answering calls) and it maps to their identity alongside other pre-created avatars.

UE 1 receives a call, and on their device's screen they are presented with the option of selecting an avatar from their own available pre-created avatars. The names or identifying icons are shown on phone dialler screen.

Note: This uses the capability of next generation RTC using the IMS data channel concept. Options may be downloaded onto the dialler in a java script screen from the DC(AR/XR) AS 360 on bootstrap data channel establishment.

Therefore, the user of UE 1 does not answer the call directly, but instead choses their avatar to do so.

UE 1's Avatar appears on UE 2 (caller or dialler's) screen when the call is established. In an example implementation the avatar asks the user of UE 2 for the reason of the call, if UE 2 wants to leave a message, and/or if the caller prefers a call-back at a certain date and time.

In an example implementation, artificial intelligence (AI) may be used to enhance the operation and control of the avatar during the call so that the call can leave a voice or text message, while talking to the avatar.

Note that Al is capable of performing text-to-speech, speech-to-text, text-to-text and speech-to-speech conversions, generate communication and display results on the screen of either or both parties.

UE 1 can receive a transcript of communications between the avatar and the caller of UE 2 on their screen.

The user of UE 1 can intervene at any point if they wish or leave the call entirely to the avatar.

When the communications between the avatar and the caller (UE 2) completes, the call ends and the network delivers the caller's (UE 2) message and/or transcript to the recipient's (user of UE 1) inbox.

In an example implementation the avatar (e.g., controlled using AI) can set or schedule a call-back time and date. For example, an application programming interface (API) call to the recipient's calendar can allow the avatar to check, verify and update the call recipient's availability. Different slots may be offered to the caller, or the caller can suggest their preferred time and date for the call-back. If a requested slot is free, the call-back can be scheduled (using the API). Otherwise, another date and/or time can be offered. This may continue until a suitable time and date is found.

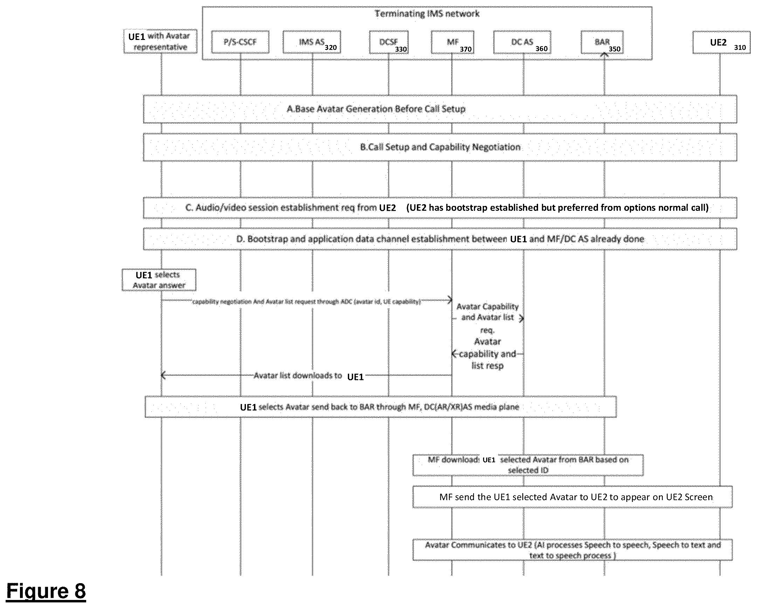

Figure 8 shows a sequence diagram illustrating method 100 in more detail. The same components and features have the same reference numerals. The subscriber of UE1 (call recipient) and the subscriber of UE2 (caller) both have permissions to use avatar calling functionality. These permissions are recorded in the component of the home network (UDR/UDM) against each subscriber identifier.

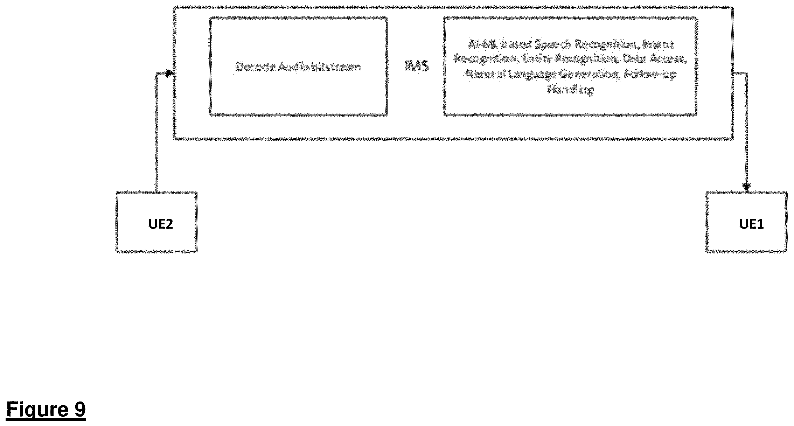

The system 300 can generate responses to speech from a caller that is party to an avatar call. The MF 370 can generate the streamed avatar data, which presents these responses in the form of the generated avatar. This is achieved using natural language processing and artificial intelligence/machine learning (Al/ML) techniques. Figure 9 shows a schematic diagram illustrating the process of speech responses from UE2 (caller) decoded and processed using Al/ML to provide follow-up handling and responses to the caller, as delivered by the avatar.

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, while only one or two devices (UEs) are shown and described, any number may be present in the communications system with similar functionality. Furthermore, any of the network components and servers may be duplicated to provide load balancing or redundancy. The avatars may be take any form and are not limited to human appearance. Different languages may be spoken by different (or the same) avatars, for example.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A communication method comprising:
receiving a call at a first user equipment, UE, wherein the call originates at a second UE;
receiving at the first UE a selection of an avatar;
the first UE sending an avatar identifier of the selected avatar to a data channel, DC, application server;
the DC application server sending the avatar identifier as part of a request for avatar definition data to an avatar storage location;
the avatar storage location retrieving the avatar definition data based on the avatar identifier;
the avatar storage location sending the avatar definition data to the DC application server;
the DC application server sending the avatar definition data to a media function, MF;
the MF generating avatar streaming data based on the avatar definition data; and
the MF sending the avatar streaming data to the second UE.

2. The method of claim 1 further comprising registering the avatar before receiving the call.

3. The method of claim 1 or claim 2, wherein during the call with the second UE, the avatar streaming data is rendered to generate an interaction of an avatar with the second UE.

4. The method of claim 3, wherein the interaction comprises a response to a query within the call of the second UE.

5. The method of claim 3 or claim 4, wherein the interaction comprises a request to obtain a reason for the call.

6. The method according to any of claims 3 to 5, wherein interaction comprises an offer for a call-back to the second UE.

7. The method of claim 6 further comprising consulting a calendar of a user of the first UE to determine an available time and date for the call-back.

8. The method of claim 7, wherein the rendered avatar presents to a user of the second UE during the call an offer of the determined available time and date for the call-back.

9. The method of claim 8, wherein when the rendered avatar receives from the user of the second UE during the call an indication of a rejection of the offered time and date for the call-back the rendering of the avatar offers an alternative time and date to the user of the second UE during the call.

10. The method of claim 8 or claim 9 further comprising the rendered avatar receiving from the user of the second UE during the call an indication of an acceptance of the offered time and date for the call-back and in response saving an appointment for the call-back at the accepted time and date in the calendar of the user of the first UE.

11. The method according to any of claims 3 to 10 further comprising providing a written description of the interaction and/or a summary of an outcome of the call.

12. The method of claim 11, wherein the written description is provided in real-time during the interaction and/or provided at a conclusion of the call.

13. The method according to any previous claim further comprising receiving a request from a user of the first UE to intervene with the call and in response to the request pausing or stopping the incorporating of the avatar streaming data in the call.

14. A user equipment, UE, comprising:
one or more processors; and
one or more memory storing computer-executable instructions that, when executed by the processor, cause the UE to:
receive a call at the UE, the UE being a first UE, wherein the call originates at a second UE;
receive a selection of an avatar; and
send an avatar identifier of the selected avatar to a data channel, DC, application server.

15. A system comprising:
one or more UE according to claim 14;
a data channel, DC, application server;
an avatar storage location; and
a media function, MF,
wherein the DC application server is configured to send the avatar identifier as part of a request for avatar definition data to the avatar storage location,
wherein the avatar storage location is configured to:
retrieve the avatar definition data based on the avatar identifier, and
send the avatar definition data to the DC application server,
wherein the DC application server is further configured to send the avatar definition data to the MF, and
wherein the MF is configured to:
generate avatar streaming data based on the avatar definition data, and
send the avatar streaming data to a second UE.
